# EUROPEAN PATENT SPECIFICATION

(11) **EP 3 038 835 B1**
(45) Date of publication and mention of the grant of the patent: **03.06.2020**
(21) Application number: 14839595.7
(22) Date of filing: 27.08.2014
(51) Int. Cl.: B41J 2/325, B41J 3/407

(54) **CASSETTE PRINTER WITH PICKER**
PATRONENDRUCKER MIT EINEM GREIFER
IMPRIMANTE À CASSETTE MUNIE D'UN BRAS

(30) Priority: 30.08.2013 US 201361871921 P
(43) Date of publication of application: 06.07.2016
(73) Proprietor: Primera Technology, Inc., Minneapolis, MN 55447-4446 (US)
(72) Inventor: HAAS, Darren W., Minnetonka, Minnesota 55345 (US); TOLRUD, Michael R., Minnetonka, Minnesota 55345 (US)
(74) Representative: Vossius & Partner Patentanwälte Rechtsanwälte mbB
(86) International application number: PCT/US2014/052909
(87) International publication number: WO 2015/031480

(56) References cited:
- EP-A1- 1 154 301
- EP-A2- 2 159 562
- WO-A1-2008/068525
- WO-A1-2012/159762
- GB-A- 2 235 163
- JP-A- H11 221 903
- US-A- 4 368 913
- US-A- 4 966 476
- US-A- 5 425 588
- US-A- 5 468 080
- US-A- 5 921 687
- US-A1- 2002 167 577
- US-A1- 2003 049 178
- US-A1- 2005 157 605
- US-A1- 2008 194 016
- US-A1- 2010 050 888
- US-A1- 2010 086 684
- US-A1- 2012 097 055
- US-A1- 2013 088 031
- US-A1- 2013 222 444
- US-A1- 2013 222 444
- US-B1- 6 302 601
- US-B1- 6 518 542
- US-B2- 6 615 763
- US-B2- 6 814 257
- US-B2- 7 514 042
- LEICA BIOSYSTEMS.: 'Instructions for use Leica IPC- Automated printing system for tissue cassettes' May 2013, XP055337263 Retrieved from the Internet: <URL:URL: http://www:leicabiosystems.com/fileadmin/do wnloadslLeica%201P%20C/User% 20Manuals/Leica%201P%20C-Manual-lv9%2ORevD_ en.pdf> [retrieved on 2014-12-16]

## Description

### TECHNICAL FIELD

The present invention relates to histological specimen cassettes. More specifically, the present invention relates to histological specimen cassette printers and methods of printing on histological specimen cassettes.

### BACKGROUND

Printers for printing information on containers such as slides and cassettes used to process histological specimens (e.g., tissue biopsies) are generally known and commercially available. These printers print information in the form of text and bar codes. Histological specimen cassettes can have different colors, shapes, and features, which can vary depending on the manufacturer of the cassettes or depending on the desired attributes of those cassettes.

Some printers have been designed to print on cassettes of certain types. However, some of those printers are not capable of printing, or have difficulty printing clearly, consistently and reliably on multiple different types of cassettes. Poor printing quality can cause inaccurate labeling of histological specimen cassettes which can produce a negative impact on testing in laboratories that test the histological specimens in those cassettes. This can ultimately produce a negative impact on patient treatment. EP-A-2159562 discloses the preamble of claim 1.

### SUMMARY

The present invention is defined in the claims.

### BRIEF DESCRIPTION OF THE DRAWINGS

FIG. 1 is a front perspective view of one embodiment of a histological specimen cassette printer.
FIG. 2 is a front perspective view of the cassette printer with a cover opened to expose a top of a cassette supply assembly.
FIG. 3 is a rear perspective view of the cassette printer with a cover opened to expose a printing assembly.
FIGS. 4 and 5 are top sectional views of the cassette printer.
FIG. 6 is a side sectional view of the cassette printer taken along section line 6-6 of FIG. 5.
FIGS. 7A-7D are enlarged views of a portion of the cassette printer showing a platform push bar mechanism.
FIG. 8A is a rear perspective view of a picker head of a cassette picker assembly.
FIG. 8B is a front perspective view of the picker head of the cassette picker assembly.
FIG. 9A is a front view of the picker head with fingers in an open position.
FIG. 9B is a front view of the picker head, lowered to contact a cassette.
FIG. 9C is a front view of the picker head, with the fingers in a closed, grasping position.
FIG. 10 is a perspective view of one embodiment of the printing assembly.
FIG. 11 is front perspective sectional view of the printing assembly.
FIG. 12A is a front sectional view of the printing assembly with a carriage in a loading position.
FIG. 12B is a front sectional view of the printing assembly with the carriage in a printing position.
FIG. 13A is a side sectional view of the printing assembly with the carriage in the loading position.
FIG. 13B is a side sectional view of the printing assembly with the carriage in the printing position.
FIGS. 14A and 14B are enlarged side views of the carriage and a printhead of the printing assembly.
FIG. 15A is a top view of a lidless type cassette.
FIG. 15B is a top view of an open lid type cassette.
FIG. 15C is a top view of a closed lid type cassette.
FIG. 16 is a bottom view of a lidless type cassette.
FIG. 17 is a perspective view of a supply bin containing a stack of the cassettes.
FIG. 18 is a side view of the supply bin.
FIG. 19 is a top view of the supply bin.
FIG. 20 is a sectional view of the supply bin taken along line 20-20 of FIG. 19.
FIG. 21 is a top view of the supply bin having an alternative embodiment of a biasing member.
FIG. 22 is a top view of the supply bin having another alternative embodiment of a biasing member.
FIG. 23 is an enlarged perspective view of the carriage of the carriage assembly without a cassette in the cassette holder.
FIG. 24 is an enlarged perspective view of the carriage of the carriage assembly with the cassette in the cassette holder.

While the invention is amenable to various modifications and alternative forms, specific embodiments have been shown by way of example in the drawings and are described in detail below. The intention, however, is not to limit the invention to the particular embodiments described. On the contrary, the invention is intended to cover all modifications, equivalents, and alternatives falling within the scope of the invention as defined by the appended claims.

### DETAILED DESCRIPTION

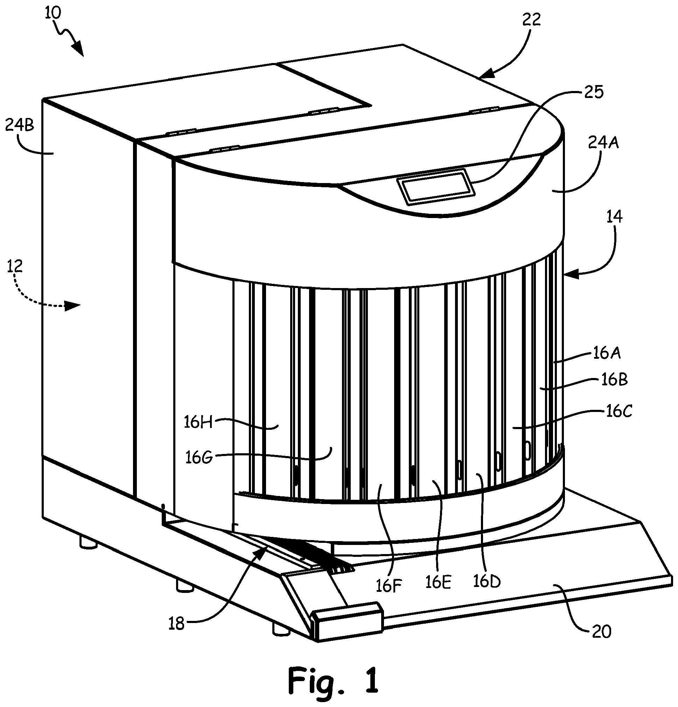

FIG. 1 is a front perspective view of one embodiment of a cassette printer 10. The cassette printer 10 is a histological specimen cassette printer 10 including a printing assembly 12 and a cassette supply assembly 14. The cassette supply assembly 14 includes a plurality of supply bins 16A-16H, each configured for storing a vertical stack of histological specimen cassettes (not shown in FIG. 1). The histological specimen cassettes are stored in the cassette supply assembly 14, then delivered to the printing assembly 12 for printing, and ultimately ejected via an ejection assembly 18 to an output platform 20. A housing 22 encloses the cassette printer 10 and includes covers 24A and 24B. The cover 24A is a hinged cover that covers the top of the cassette supply assembly 14. The cover 24B is a hinged cover that covers and encloses the printer assembly 12. A user interface controller 25 is mounted on the cover 24A of the housing 22. The user interface controller 25 can include an input device, a display, and a controller for allowing a user to interface with and control operation of the cassette printer 10. The user interface controller 25 can connect to and control operation of both the printing assembly and the cassette supply assembly 14. In some embodiments, the user interface controller 25 can connect to and communicate with additional controllers (not shown) that are dedicated to the printing assembly and the cassette supply assembly, respectively.

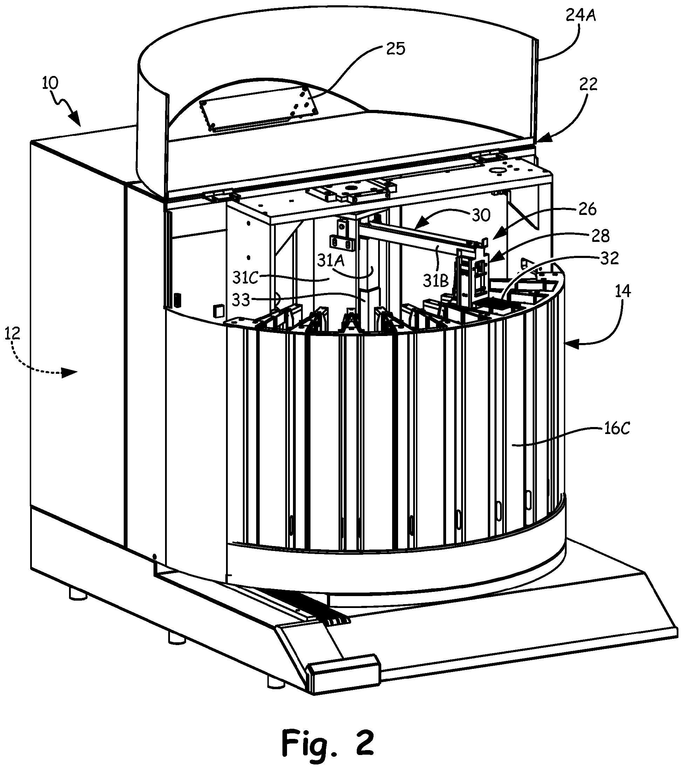

FIG. 2 is a front perspective view of the cassette printer 10 with the cover 24A opened to expose the top of the cassette supply assembly 14. The cassette printer 10 includes a cassette picker assembly 26 which includes a picker head 28 attached to a picker actuator 30. The cassette picker assembly 26 picks cassettes from the cassette supply assembly 14 and delivers the cassettes to the printing assembly 12. As illustrated in FIG. 2, the picker actuator 30 has aligned the picker head 28 with the supply bin 16C. A cassette 32 is illustrated as being grasped by the picker head 28. The cassette 32 is one embodiment of a histological specimen cassette. In some embodiments, the cassette picker assembly 26 can pick up different types of histological specimen cassettes, as further described below.

The picker actuator 30 includes actuator supports 31A, 31B, and 31C. The actuator support 31A is a vertical support rigidly connected to the actuator support 31B. The actuator support 31B is an arm extending substantially horizontally from the actuator support 31A to the picker head 28. The actuator support 31C is a frame with 2 guide shafts 33 and is rotatable about a vertical axis of rotation A_{P}. The actuator support 31A is slidably connected to the guide shafts 33 of the actuator support 31C. Thus in the illustrated embodiment, when the picker actuator 30 rotates about the vertical axis of rotation A_{P}, the actuator supports 31A-31C and the picker head 28 all rotate. When the picker actuator 30 raises and lowers the picker head 28, the actuator supports 31A and 31B are also raised and lowered, while the actuator support 31C remains stationary.

In operation, the picker actuator 30 can lower the picker head 28 into the supply bin 16C to pick the cassette 32 from a top of the supply bin 16C. The cassette 32 can then be lifted out of the supply bin 16C and delivered to the printing assembly 12 via rotation of the picker actuator 30. The cassette picker assembly 26 can continue to pick subsequent cassettes 32 from a top of a stack of the cassettes 32 in the supply bin 16C until it reaches a bottom of the supply bin 16C in the cassette supply assembly 14. The cassette picker assembly 26 can them mover to another of the supply bins 16A-16H and continue picking the cassettes 32 from that supply bin. Alternatively, the cassette picker assembly 26 can pick alternately from different supply bins 16A-16H as directed by a user. For example, the user could select first a yellow closed lid type tissue cassette from the supply bin 16A, the user could select second a white lidless type tissue cassette from the supply bin 16B, and the user could select third a white open lid type biopsy cassette from the supply bin 16C. The cassette picker assembly 26 can respond by picking and delivering the cassettes 32 in order from the supply bin 16A, then from supply bin 16B, and then from supply bin 16C. Thus, the picker assembly 26 and the cassette supply assembly 14 having multiple supply bins 16B can increase total supply of the cassettes 32 and/or can allow the cassette printer 10 to store and allow for selection and printing of multiple different types of the cassettes 32 without having to load new cassettes 32 every time.

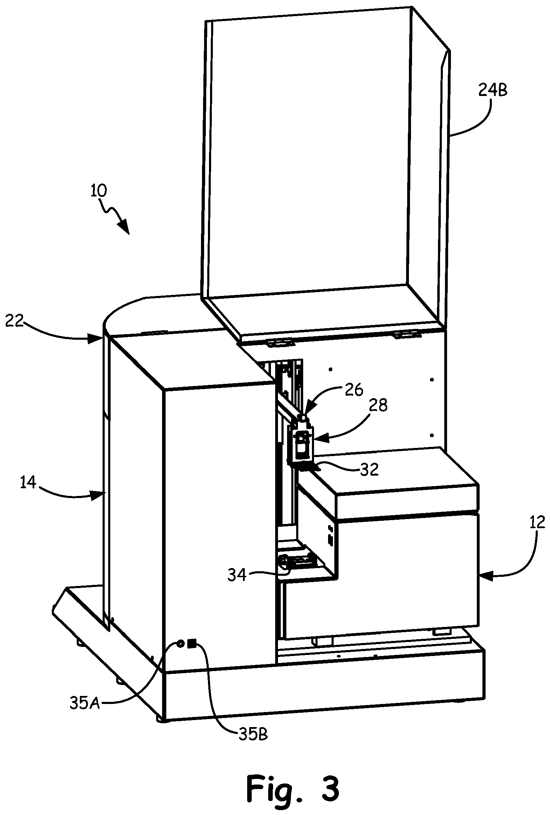

FIG. 3 is a rear perspective view of the cassette printer 10 with the cover 24B opened to expose the printing assembly 12. As shown in FIG. 3, the picker head 28 of the cassette picker assembly 26 is positioned in a printing section of the cassette printer 10, above a cassette holder 34 of the printing assembly 12. The cassette picker assembly 26 can lower the picker head 28 to a position proximate the cassette holder 34, and then release the cassette 32 to the cassette holder 34. The printing assembly 12 can then print on the cassette 32 as further described below. In some embodiments, the printing assembly 12 can be removed and used independently of the cassette supply assembly 14.

In the illustrated embodiment, the cassette printer 10 includes a power jack 35A and a computer interface 35B positioned on a rear side of the housing 22. The power jack 35A can connect to an electrical power cord (not shown) for powering all parts of the cassette printer 10, including the printing assembly 12 and the cassette supply assembly 14. The computer interface 35B can be a USB (universal serial bus) or other suitable interface for allowing communication with a computer (such as a personal computer, laboratory information system, or other computer) or other electronic device (such as a barcode scanner, keyboard, or other user interface device). The computer interface 35B can allow a user to control the cassette printer 10 via an external computer or device instead of, or in addition to, using the user interface controller 25 (shown in FIGS. 1 and 2).

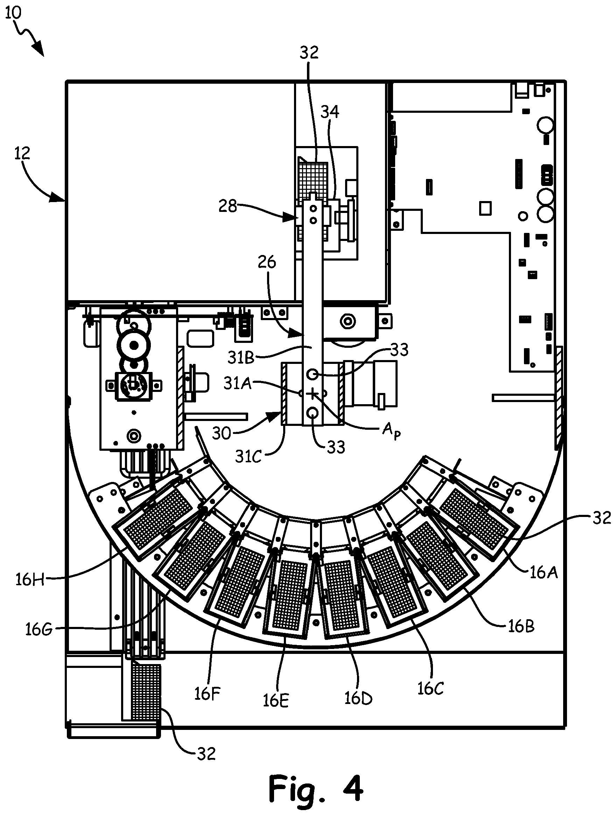

FIG. 4 is a top sectional view of the cassette printer 10 with the housing 22 (shown in FIGS. 1-3) removed. As shown in FIG. 4, the cassette picker assembly 26 is in the same position as shown in FIG. 3, with the picker head 28 of the cassette picker assembly 26 positioned in a printing section of the cassette printer 10, above a cassette holder 34 of the printing assembly 12. The supply bins 16A-16H are arranged in an arc about the vertical axis of rotation A_{P} of the picker actuator 30. Each of the supply bins 16A-16H are positioned substantially the same distance from the vertical axis of rotation A_{P} of the picker actuator 30.

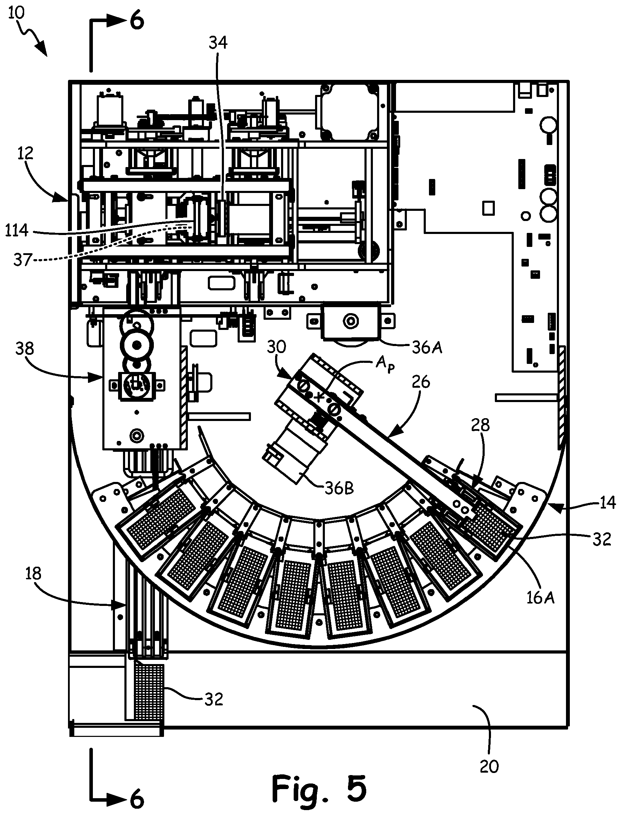

FIG. 5 is a top sectional view of the cassette printer 10 with the housing 22 (shown in FIGS. 1-3) removed. As shown in FIG. 5, the cassette picker assembly 26 is in a position rotated from the position shown in FIG. 4, with the picker head 28 of the cassette picker assembly 26 positioned above a top of the supply bin 16A. The picker actuator 30 includes actuation motors 36A and 36B for actuating the cassette picker assembly 26. The actuation motor 36A can rotate the actuator supports 31A, 31B, and 31C and the picker head 28 about the vertical axis of rotation A_{P}. The actuation motor 36B can raise and lower the actuator supports 31A and 31B and the picker head 28. The actuation motors 36A and 36B can drive the cassette picker assembly 26 via belts, pulleys, gears, and/or one or more other mechanisms suitable for the application.

A cover of the printing assembly 12 is also removed, exposing internal components of the printing assembly 12. As illustrated in FIG. 5, the cassette holder 34 has been slid from a loading position (shown in FIG. 4) to a printing position whereby the cassette holder 34 is positioned proximate a printhead assembly 114 of the printing assembly 12. In the illustrated embodiment, the cassette holder 34 is positioned below a printhead 37 at a bottom of the printhead assembly 114.

After the printhead 37 has printed on the cassette 32, the cassette 32 can be ejected via the ejection assembly 18, which includes a cassette eject mechanism 38. As illustrated in FIG. 5, the cassette 32 is positioned on the output platform 20 after having been ejected via the ejection assembly 18.

In the illustrated embodiment, the cassette picker assembly 26 moves between the cassette supply assembly 14 and the printing assembly 12 so as to pick the cassettes 32 from a top of the cassette supply assembly 14 and deliver the cassettes 32 to the printing assembly 12. In alternative embodiments, the cassette picker assembly 26 can be replaced by an assembly different than as illustrated. In further alternative embodiments, some or all of the cassette picker assembly 26 and/or the cassette supply assembly 14 can be omitted. For example, in one embodiment the printing assembly 12 can be loaded manually by a user without using the cassette picker assembly 26 or the cassette supply assembly 14.

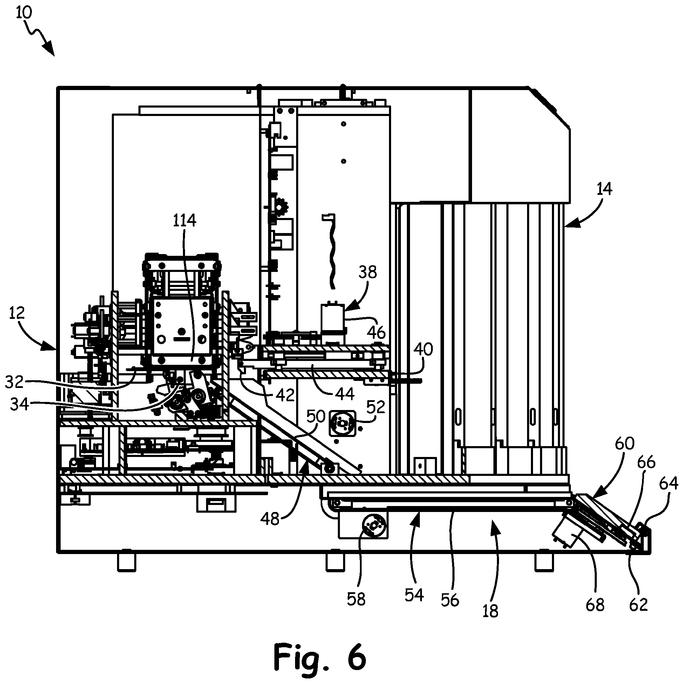

FIG. 6 is a side sectional view of the cassette printer 10 taken along section line 6-6 of FIG. 5. In the illustrated embodiment, the ejection assembly 18 includes the cassette eject mechanism 38 (which includes an eject mechanism sensor 40, a pivotable hook 42 and an extendable arm 44 driven by an eject mechanism motor 46), a transition output conveyor 48 (which includes a belt 50 driven by a transition output conveyor motor 52), an output conveyor 54 (which includes a belt 56 driven by an output conveyor motor 58), and a platform push bar mechanism 60 (which include an output LED (light emitting diode) 62, an output sensor 64, and a push bar 66 driven by a push bar motor 68).

After the printhead 37 has printed on the cassette 32, the cassette eject mechanism 38 can hook the cassette 32 and then pull the cassette 32 onto the transition output conveyor 48. When the printing assembly 12 finishes printing the cassette 32, the printing assembly 12 will move the cassette holder 34 to the output position and the eject mechanism motor 46 can drive the extendable arm 44 to extend laterally (toward the left as shown in FIG. 6). The pivotable hook 42 can pivot up when pushed against an object (such as a cassette 32) and then spring back down to hook an edge of the cassette 32. The eject mechanism motor 46 can then drive the extendable arm 44 to pull the cassette 32 laterally back (toward the right as shown in FIG. 6) and onto the transition output conveyor 48. The eject mechanism sensor 40 senses the lateral position of the extendable arm 44 to verify whether an eject cycle has completed.

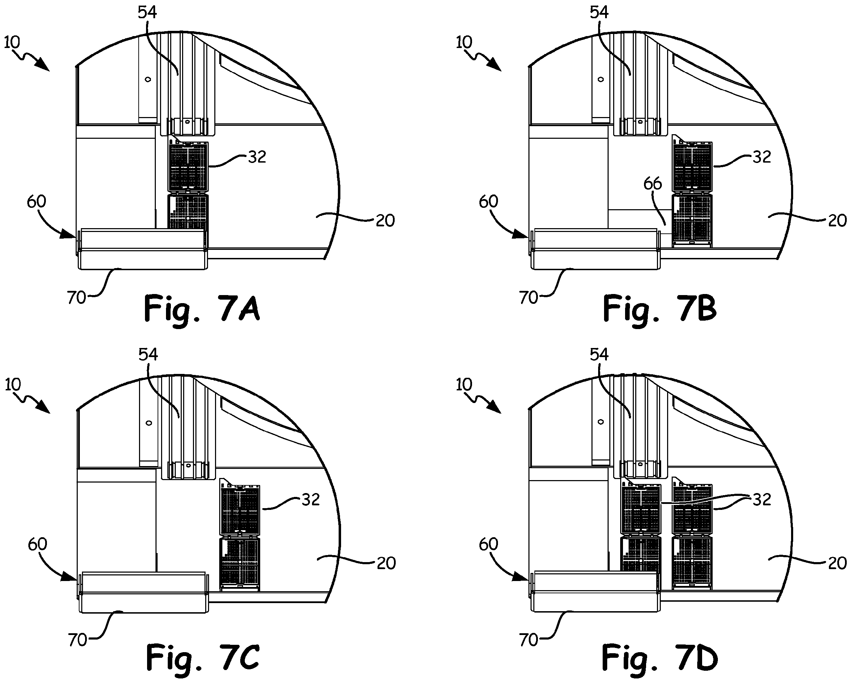

The transition output conveyor motor 52 can then drive the belt 50 to move the cassette 32 to the output conveyor 54. The output conveyor motor 58 can then drive the belt 56 to move the cassette 32 to the output platform 20, near the platform push bar mechanism 60. When the output sensor 64 senses that the cassette 32 has blocked light emitting from the output LED 62, the push bar motor 68 can drive the push bar 66 to push the cassette 32 out of the way to make room for another cassette 32, as further described with respect to FIGS. 7A-7D.

FIGS. 7A-7D are enlarged views of a portion of the cassette printer 10 showing the platform push bar mechanism 60. FIGS. 7A-7D illustrate sequential operation of one embodiment of the platform push bar mechanism 60. In FIG. 7A, the cassette 32 has been delivered from the output conveyor 54 to the output platform 20, near the platform push bar mechanism 60. The cassette 32 is positioned near the platform push bar mechanism 60 adjacent a stopper 70, which can catch the cassette 32 as it comes from the output conveyor 54. In FIG. 7B, the push bar motor 68 (shown in FIG. 6) has driven the push bar 66 to push the cassette 32 laterally (toward the right as shown in FIG. 7B) to make room for a second cassette. In FIG. 7C, the push bar 66 (shown in FIG. 7B) has been retracted out of the way. In FIG. 7D, a second cassette 32 has been received near the platform push bar mechanism 60 from the output conveyor 54. This cycle can be repeated for subsequent cassettes so as to align a series of printed cassettes along the output platform 20.

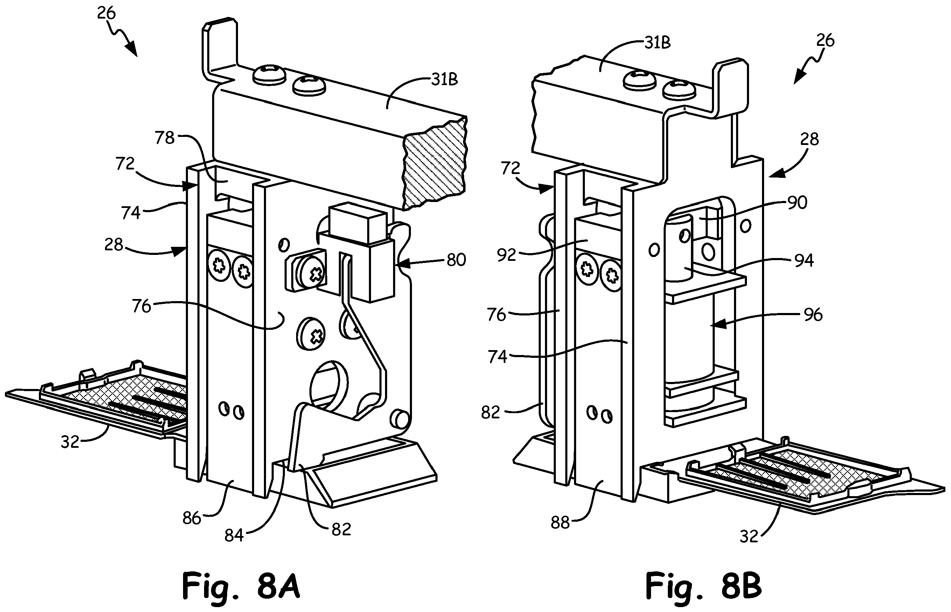

FIG. 8A is a rear perspective view of the picker head 28 of the cassette picker assembly 26. In the illustrated embodiment, the picker head 28 includes a picker frame 72 bolted to a bottom of, and supported by, the actuator support 31B. The picker frame 72 includes a front plate 74 and a back plate 76 connected by a top support 78. In the illustrated embodiment, the front plate 74, the back plate 76, and the top support 78 are integrally formed as a single rigid piece. The front plate 74 is substantially parallel to and spaced from the back plate 76. A cassette sensor 80 is mounted to the back plate 76. The cassette sensor 80 is a cassette-present sensor that includes a sensor flag 82 positioned at a bottom 84 of the picker head 28 for sensing when the cassette 32 is present, adjacent the bottom 84 of the picker head 28. A finger 86 is positioned between the front plate 74 and the back plate 76. The finger 86 has a vertically elongate length and a laterally elongate width as compared to a relatively thin thickness. The finger 86 extends laterally substantially across the entire distance between the front plate 74 and the back plate 76. Operation of the finger 86 is further described below.

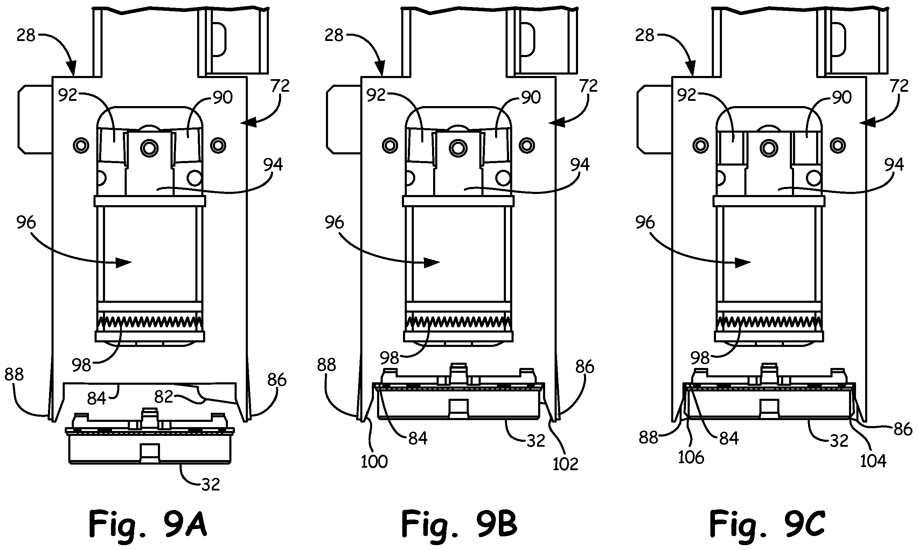

FIG. 8B is a front perspective view of the picker head 28 of the cassette picker assembly 26. As shown in FIG. 8B, a finger 88 is positioned between the front plate 74 and the back plate 76, and is positioned opposite the finger 86. Links 90 and 92 are rigidly connected to the fingers 86 and 88, respectively, and are pivotably connected to the picker frame 72 and to a plunger 94 of a solenoid 96. The solenoid 96 and the plunger 94 are positioned in an inner cavity defined by the picker frame 72, between the front and back plates 74 and 76 and between the fingers 86 and 88. When the picker actuator 30 descends to pick up the cassette 32, a controller (not shown) signals the solenoid 96 to actuate the plunger 94 downward, which pivots the links 90 and 92 with respect to the picker frame 72 and causes the fingers 86 and 88 to pivot outwards so the cassette 32 can seat against the bottom 84 of the picker head 28. When the sensor flag 82 senses that the cassette 32 is adjacent the bottom 84 of the picker head 28, the cassette sensor 80 can signal the controller to signal the solenoid 96 to release the plunger 94. A spring 98 (shown in FIG. 9A-9C) can apply an inward force on the fingers 86 and 88 tending to pivot the fingers 86 and 88 inward. When the solenoid 96 releases the plunger 94, the spring 98 pivots the fingers 86 and 88 inward to grasp the cassette 32. The controller can be programmed to actuate the picker head 28 to grasp the cassette 32 in response to receiving a signal from the cassette sensor 80.

In the illustrated embodiment, the fingers 86 and 88 are substantially mirror images each other, each having a vertically elongate length and a laterally elongate width as compared to a relatively thin thickness. In other embodiments, the fingers 86 and 88 can be shaped differently than as illustrated so long as lower ends of the fingers 86 and 88 are laterally elongate. In still other embodiments, such as embodiments with additional fingers, the fingers 86 and 88 can be narrower than as illustrated. For example, in one alternative embodiment, the picker head 28 can include a third finger (not shown). The third finger can be spaced from the first and second fingers 86 and 88 and can be actuable such that a lower end of the third finger moves to grasp the cassette 32 along with the first and second fingers 86 and 88. The third finger can be positioned opposite of the first finger 86 and can move in unison with the second finger 88. For example, the third finger can be rigidly connected to the second finger 88. In further alternative embodiments, the picker head 28 can have a different configuration suitable for the application.

FIG. 9A is a front view of the picker head 28 with the fingers 86 and 88 in an open position. The picker head 28 is positioned proximate the cassette 32, with the cassette 32 spaced from and below the bottom 84 of the picker head 28. This illustrates a position of the picker head 28 while the picker actuator 30 (shown in FIGS. 2, 4 and 5) is lowering the picker head 28 to pick up the cassette 32 and just before reaching the cassette 32. The picker head 28 includes a spring 98 biasing the fingers 86 and 88 toward a closed position. In the illustrated embodiment, the spring 98 is a coil-spring extended between the fingers 86 and 88. In alternative embodiments, the spring 98 can be replaced by one or more springs having a different configuration, position, or orientation than that of the spring 98 so long as the spring or springs are suitable for biasing the fingers 86 and 88 in a closed position.

FIG. 9B is a front view of the picker head 28, lowered to contact the cassette 32. In this position, the cassette 32 is adjacent and abutting the bottom 84 of the picker head 28. In the illustrated embodiment, the picker frame 72 has projections 100 and 102 at the bottom 84 of the picker head 28 and that define a gap there-between. The projections 100 and 102 provide lead-ins to help center the cassette 32 in the picker frame 72 as the picker head 28 is lowered onto the cassette 32. The cassette 32 is positioned between the projections 100 and 102 at the bottom 84 of the picker head 28. Once the picker head 28 is lowered to the cassette 32, the picker flag 82 (shown in FIG. 9A) is raised by contact with the cassette 32 to indicate that the cassette 32 is in position to be grasped by the fingers 86 and 88. In the position illustrated in FIG. 9B, the fingers 86 and 88 are positioned outward of the projections 100 and 102 such that the fingers 86 and 88 are spaced further from the cassette 32 than are the projections 100 and 102.

FIG. 9C is a front view of the picker head 28, with the fingers 86 and 88 in a closed, grasping position. The solenoid 96 has released the plunger 94 upward, which allows the spring 98 to apply a force on the fingers 86 and 88 that rotates the fingers 86 and 88 inward, causing the lower ends of the fingers 86 and 88 to move inward to grasp opposite sides of the cassette 32. Teeth 104 and 106 extend inward from lower ends of the fingers 86 and 88, respectively, toward the cassette 32. The tooth 104 extends toward the finger 88 and the tooth 106 extends toward the finger 86. The teeth 104 and 106 can help grasp and hold the cassette 32 more securely. In alternative embodiments, the teeth can be omitted or replaced by diamond studs or another slip-resistant grasping feature.

In the illustrated embodiment, the picker head 28 grasps opposite sides of the cassette 32 so as to hold the cassette 32 to be transported to the printing assembly 12. In alternative embodiments, the picker head 28 can grasp the cassette 32 in a manner differently than as illustrated.

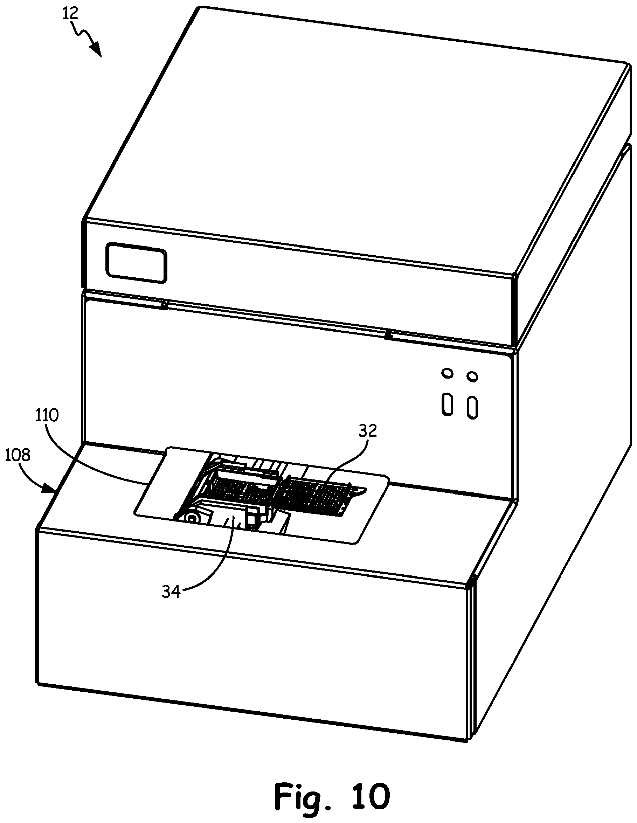

FIG. 10 is a perspective view of one embodiment of the printing assembly 12. In the illustrated embodiment, the printing assembly 12 has a housing 108 that defines an opening 110 that exposes the cassette holder 34 while the cassette holder 34 is in the loading position. The opening 110 allows the cassette picker assembly 26 (shown in FIGS. 2-5 and 8A-9C) to place or otherwise deliver the cassette 32 in the cassette holder 34.

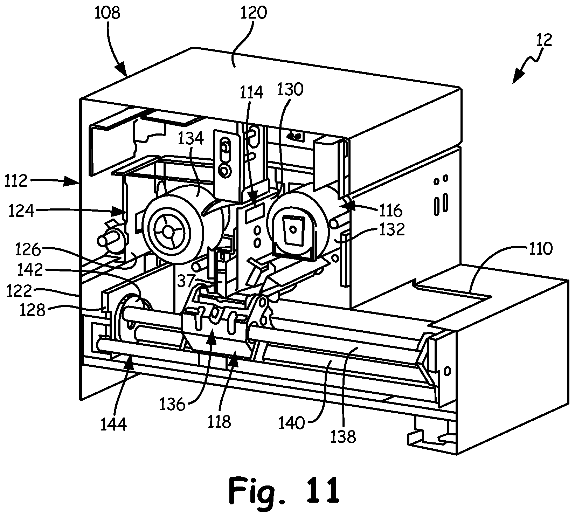

FIG. 11 is front perspective sectional view of the printing assembly 12. In the illustrated embodiment, the printing assembly 12 includes a printer frame 112, a printhead assembly 114, a ribbon assembly 116, and a carriage assembly 118. The printer frame 112 can be a base frame that includes the housing 108 (which includes a lid 120 and a housing base 122) and the main frame 124 (which includes the top frame 126 and the bottom frame 128). The lid 120 of the housing 108 is mounted to the top frame 126 of the main frame 124. The housing base 122 of the housing 108 is mounted to and encloses the bottom frame 128 of the main frame 124. The top frame 126 is pivotably mounted to the bottom frame 128 such that the lid 120 is openable with respect to the housing base 122.

The printhead assembly 114 is mounted to the top frame 126. The printhead assembly 114 includes a subframe 130 and the printhead 37. The subframe 130 is connected to the top frame 126 and the printhead 37 is mounted to the sub frame 130. The ribbon assembly 116 is mounted to the bottom frame 128 and includes a supply roll 132 and a take-up roll 134.

The carriage assembly 118 includes a carriage 136, rails 138 and 140, gearing 142, and a belt drive assembly 144. The carriage 136 is slidably mounted on the rails 138 and 140. The rails 138 and 140 are substantially parallel rails pivotably supported at their ends by the bottom frame 128. One end of the rails 138 and 140 is connected to the gearing 142 which can rotate the carriage 136 and the rails 138 and 140 as further described below. The belt drive assembly 144 is connected to the carriage 136 and to the bottom frame 128 and is configured to slide the carriage 136 laterally along the rails 138 and 140. As illustrated in FIG. 11, the carriage 136 is positioned in a printing position proximate the printhead 37.

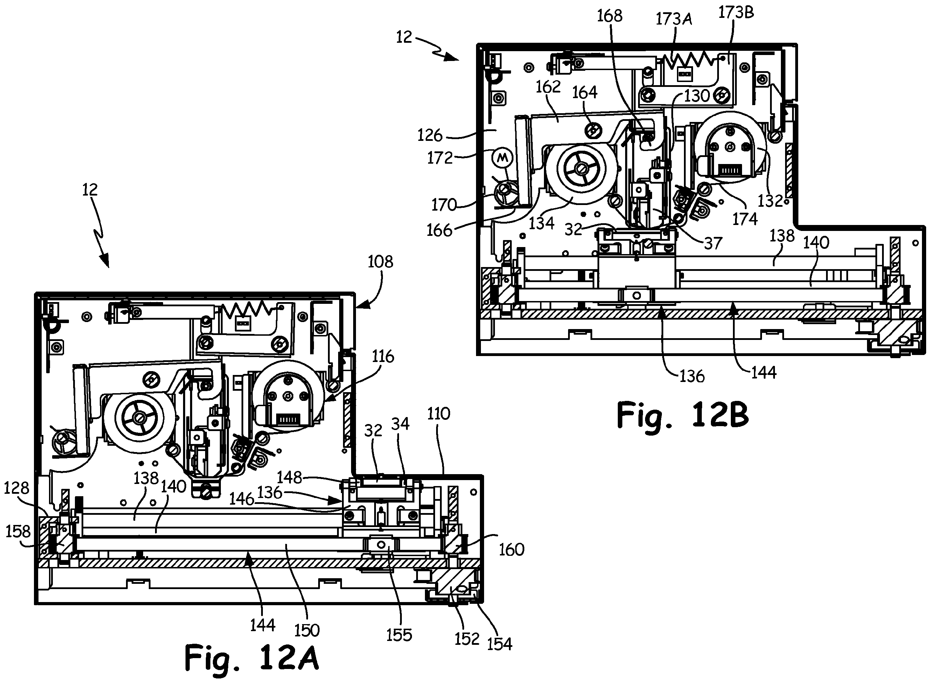

FIG. 12A is a front sectional view of the printing assembly 12 with the carriage 136 in a loading position. The carriage 136, which includes the cassette holder 34 pivotably mounted to a carriage base 146, is positioned proximate and below the opening 110 of the housing 108. The cassette 32 can be inserted through the opening 110 and placed in the cassette holder 34. The cassette holder 34 includes a spring-loaded clamp 148 which slides laterally closed on the cassette 32 to clamp the cassette 32 in the cassette holder 34 when the carriage 136 slides laterally from the loading position (shown in FIG. 12A) to the printing position (shown in FIGS. 11 and 12B).

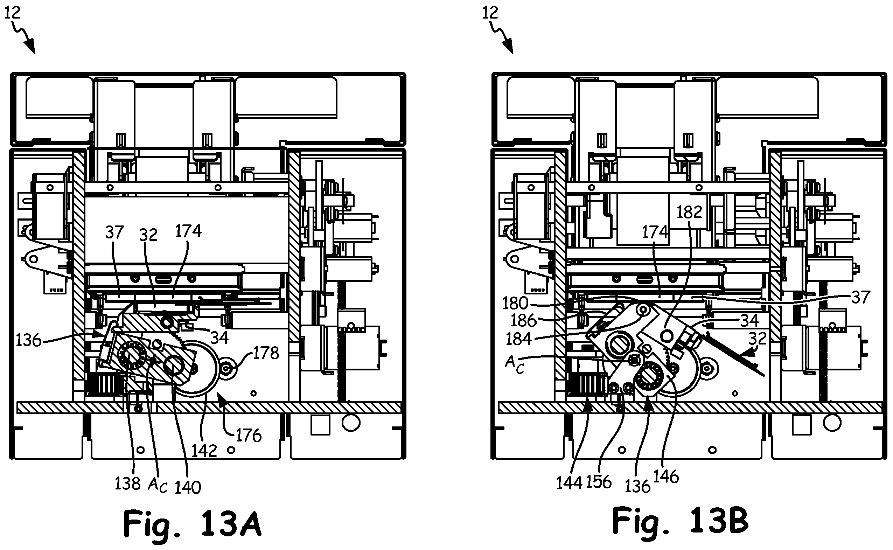

The belt drive assembly 144 slides the carriage 136 laterally along the rails 138 and 140. The belt drive assembly 144 includes a belt 150, a belt drive motor 152, a mounting bracket 154, a belt drive clamp 155, a belt drive pivot bracket 156 (shown in FIG. 13B), and spindles 158 and 160. The belt 150 extends from and is wrapped around the spindle 158 and 160, which are pivotably mounted to the bottom frame 128. The spindle 160 is mounted on a rotatable shaft of the belt drive motor 152, which is mounted to the bottom frame 128 via the mounting bracket 154. The belt 150 is connected by the belt drive clamp 155 to the belt drive pivot bracket 156, which is connected to the carriage base 146 of the carriage 136. When the belt drive motor 152 rotates, it rotates the spindle 160 which drives the belt 150 to move the belt drive clamp 155 and the carriage 136 laterally left and right, depending on the direction of rotation of the belt drive motor 152.

FIG. 12B is a front sectional view of the printing assembly 12 with the carriage 136 in a printing position. In the illustrated embodiment, a lever 162 is pivotably mounted about a pivot 164 that is rigidly connected to the top frame 126. The lever 162 has a cam follower 166 at a first end and an end finger 168 at a second end. The cam follower 166 is in following contact with a cam 170, which is driven by a cam motor 172. The end finger 168 is operably connected to the subframe 130 such that rotation of the cam 170 causes the lever 162 to pivot so as to lift and lower the subframe 130 and the printhead 37. The printhead 37 can be movable between a first printhead position spaced from the carriage 136 and a second printhead position closer to the carriage 136. A spring 173A is connected in tension to a lever 173B, which is connected to the subframe 130 and operates to apply a downward force on the subframe 130 and to bias the printhead 37 in the second printhead position.

The cam motor 172 can operate to lift the printhead 37 when the carriage 136 is being slid to the printing position and then can operated to lower the printhead 37 when the carriage 136 is in the printing position. When the printhead 37 is lowered, it can contact and press against a front panel of the cassette 32. In the illustrated embodiment, the printhead 37 is a thermal printhead that operates to transfer thermal ink from a ribbon 174 extending from the supply roll 132 to the take-up roll 134. In the illustrated embodiment, the printhead 37 contacts the cassette 32 indirectly, due to the ribbon 174 being positioned between the printhead 37 and the cassette 32. In one embodiment, the ribbon 174 is a multicolored ribbon having sections of different color along the ribbon. In another embodiment, the ribbon 174 can be a monochromatic ribbon.

FIG. 13A is a side sectional view of the printing assembly 12 with the carriage 136 in the loading position, such as shown in FIG. 12A. In the loading position of the illustrated embodiment, the carriage 136 is oriented such that the cassette holder 34 and the cassette 32 are substantially horizontal. In alternative embodiments, the carriage 136 can be oriented such that the cassette holder 34 has an orientation that is not horizontal so long as it is suitable for being loaded with the cassette 32.

A carriage rotation assembly 176 includes a carriage rotation motor 178 operably connected to the gearing 142 for rotating the rails 138 and 140, and consequently rotating the carriage 136 with respect to the printhead 37. The carriage rotation assembly 176 can rotate the carriage 136 clockwise and counterclockwise about a horizontal axis of rotation A_{C}. After the cassette 32 has been loaded in the cassette holder 34, the carriage rotation motor 178 can rotate the carriage clockwise as shown in FIG. 13B.

FIG. 13B is a side sectional view of the printing assembly 12 with the carriage 136 in the printing position, such as shown in FIG. 12B. As illustrated in FIG. 13B, the carriage 136 is rotated clockwise by about 33 degrees from the position shown in FIG. 13A. Thus, the cassette holder 34 is angled about 33 degrees from horizontal. By rotating the carriage 136, a front panel 180 of the cassette 32 is turned upward toward the printhead 37.

In the illustrated embodiment, the carriage base 146 is pivotably attached to the belt drive pivot bracket 156 such that the belt drive pivot bracket 156 remains substantially stationary when the carriage 136 is rotated. Thus, substantially all portions of the belt drive assembly 144 can remain substantially stationary when the carriage 136 is rotated.

The front panel 180 of the cassette 32 can have a different angle depending on what type of cassette 32 is being used. For example, in one embodiment, the front panel 180 of the cassette 32 can be angled by about 35 degrees with respect to a bottom of the cassette 32. In that embodiment, the front panel 180 of the cassette 32 would be angled by about 2 degrees from horizontal as shown in FIG. 13B. In one embodiment, the front panel 180 of the cassette 32 can be angled by about 45 degrees with respect to a bottom of the cassette 32. In that embodiment, the front panel 180 of the cassette 32 would be angled by about 12 degrees from horizontal as shown in FIG. 13B. Because tolerances can vary, the angle of the front panel 180 with respect to horizontal can vary from cassette to cassette.

In one embodiment, the carriage 136 and the cassette 32 can be rotated prior to clamping the cassette 32 via the spring loaded clamp 148 (shown in FIG. 12A). In another embodiment, the carriage 136 and the cassette 32 can be first rotated, and then the cassette 32 can be clamped in the cassette holder 34 prior to pressing the printhead 37 against the ribbon 174 which presses against a printable surface on the front panel 180.

The cassette holder 34 is part of a springboard 182 which is pivotably attached to the carriage base 146 about a pin 184. The springboard 182 can include a springboard spring 186 which biases the springboard 182 to pivot in a counter-clockwise direction. When the printhead 37 is lowered to abut and press the ribbon 174 against the front panel 180, a force is applied in a direction opposite that of the springboard spring 186 to rotate the springboard 182, the cassette holder 34, and the cassette 32 until the front panel 180 is substantially flat against the printhead 37. In the illustrated embodiment, the springboard spring 186 is a coil spring in tension to bias the springboard 182 counterclockwise. In alternative embodiments, the springboard spring 186 can be another spring suitable to provide a biasing force on the springboard 182.

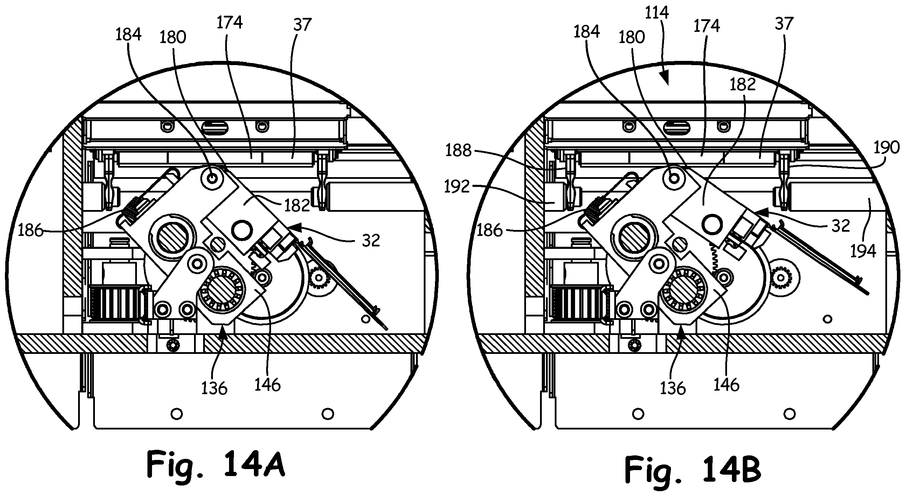

FIG. 14A is an enlarged side view of the carriage 136 and the printhead 37 of the printing assembly 12. The cassette 32 that is held in the carriage 136 in FIG. 14A has the front panel 180 angled by about 45 degrees with respect to the bottom of the cassette 32. The printhead 37 has been lowered to press the ribbon 174 against the front panel 180 to pivot the cassette 32 by about 12 degrees (or more or less depending on tolerances) with respect to the carriage base 146. The printhead 37 can rotate the cassette 32 such that the front panel 180 is substantially flat against the printhead 37. The downward acting force by the printhead 37 is substantially larger than the rotational force of the springboard spring 186 so that the force of the printhead 36 acting on the ribbon 174 and the front panel 180 is not substantially changed as the springboard 182 pivots. Thus, the printing assembly 12 can be suitable for applications using thermal transfer printing, which uses heat and pressure to transfer resin from the ribbon 174 to the front panel 180.

FIG. 14B is an enlarged side view of the carriage 136 and the printhead 37 of the printing assembly 12. The cassette 32 that is held in the carriage 136 in FIG. 14B has the front panel 180 angled by about 35 degrees with respect to the bottom of the cassette 32. The printhead 37 has been lowered to press the ribbon 174 against the front panel 180 to pivot the cassette 32 by about 2 degrees (or more or less depending on tolerances) with respect to the carriage base 146. The printhead 37 can rotate the cassette 32 such that the front panel 180 is substantially flat against the printhead 37.

Thus, FIGS. 14A and 14B show that the springboard 182 can pivot between various positions in response to the printhead 37 so as to accommodate various cassettes 32 having different angles for the front panels 180. In one embodiment, the springboard 182 is rotatable with respect to the carriage base 146 by an angle of at least 14 degrees. This 14 degree angle of rotation about the pin 184 is in addition to the 33 degree angle of rotation by the carriage 136 about the horizontal axis of rotation A_{C}, described with respect to FIGS. 13A and 13C. In alternative embodiments, the springboard 182 can be rotatable with respect to the carriage base 146 by more than 10 degrees.

In the illustrated embodiment, the pin 184 defines an axis of rotation for the springboard 182 that is different than and parallel to the horizontal axis of rotation A_{C}. In an alternative embodiment, the axis of rotation for the springboard 182 can be the same as the horizontal axis of rotation A_{C}. In another alternative embodiment, the axis of rotation for the springboard 182 can be angled with respect to the horizontal axis of rotation A_{C}.

The pivoting action of the springboard 182 can also accommodate imperfections found on the front panel 180. For example, if the cassette 32 includes variations in flatness, such as bumps or indentations, formed on the front panel 180, the springboard 182 can pivot as the printhead 37 moves along the front panel 180 so as to improve contact between the printhead 37 and the front panel 180 as the front panel 180 slides along the printhead 37 during printing. This can be particularly helpful in applications where the printhead 37 is a thermal printhead that functions via pressing the ribbon 174 (shown in FIG. 12B, 14A, and 14B) against the front panel 180 and applying heat to transfer ink from the ribbon 174 to the front panel 180.

In the illustrated embodiment, print head forks 188 and 190 extend downward from the printhead assembly 114 to contact rigid support pins 192 and 194, respectively. The printhead forks 188 and 190 align the printhead assembly 114 to the path of the carriage 136. The pivoting action of the springboard 182 allows the cassette face 180 to pivot relative to the printhead 36 automatically to maintain a uniform print pressure across the front panel 18, which can facilitate thermal transfer printing.

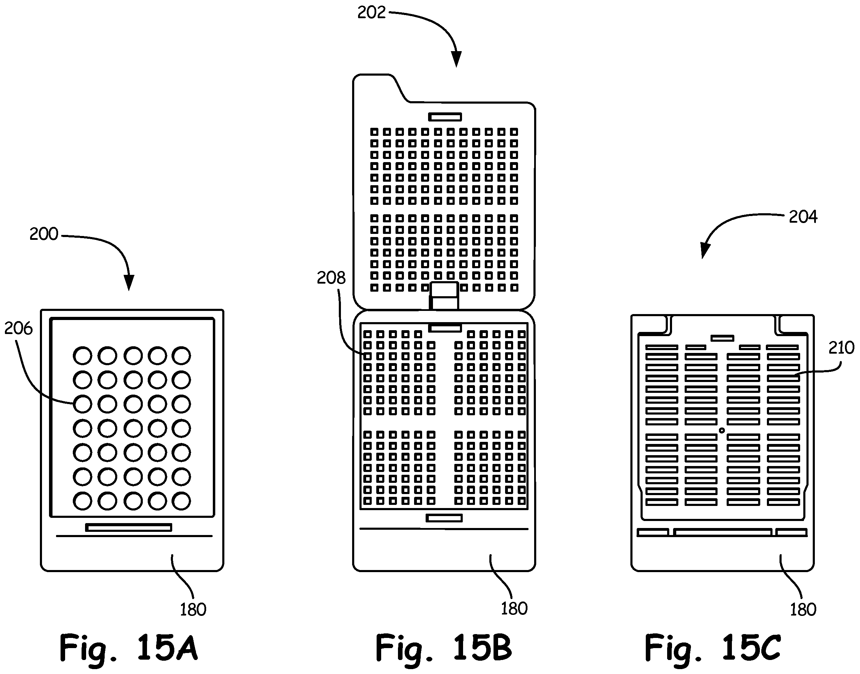

FIG. 15A is a top view of a lidless type embedding cassette 200. FIG. 15B is a top view of an open lid type biopsy cassette 202. FIG. 15C is a top view of a closed lid type tissue cassette 204. The lidless type embedding cassette 200 is shown having relatively large circular drain holes 206. The open lid type biopsy cassette 202 is shown having relatively small square drain holes 208. The closed lid type tissue cassette 204 is shown having elongated drain holes 210. In alternative embodiments, the size and shape of the drain holes 206, 208, and 210 can be varied. While the cassettes 200, 202, and 204 have different shapes and weight distributions, each of the cassettes 200, 202, and 204 can be used in place of the cassette 32 shown and described above for use in the cassette printer 10. The front panel 180 of various cassettes are commonly available in 35 degree and 45 degree angles.

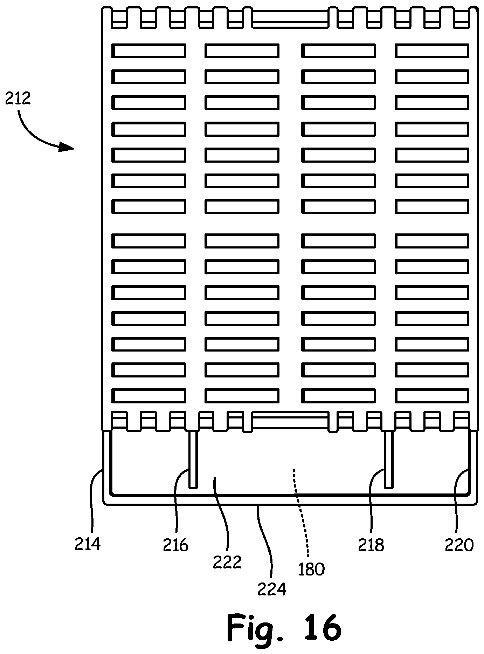

FIG. 16 is a bottom view of a lidless type cassette 212. In the illustrated embodiment, the cassette 212 includes ribs 214, 216, 218, and 220 supporting the front panel 180. In embodiments where the cassette 212 is injection molded, the front panel 180 can have indentations at locations where the ribs 214, 216, 218, and 220 connect to the front panel 180. Additionally, the front panel 180 can also have bumps or indentations at locations along the front panel between the ribs 214, 216, 218, and 220. In the illustrated embodiment for example, the front panel 180 has a relatively long span 222 between the ribs 216 and 218. A front edge 224 at a middle of that span 222 can be lower than other portions of the front panel 180. Pivoting motion of the springboard 182, as described above, can allow the printhead 37 to better print on bumps and indentations of the front panel 180 of the cassette 212 by automatically balancing the force of the printhead 37 across the front panel 180.

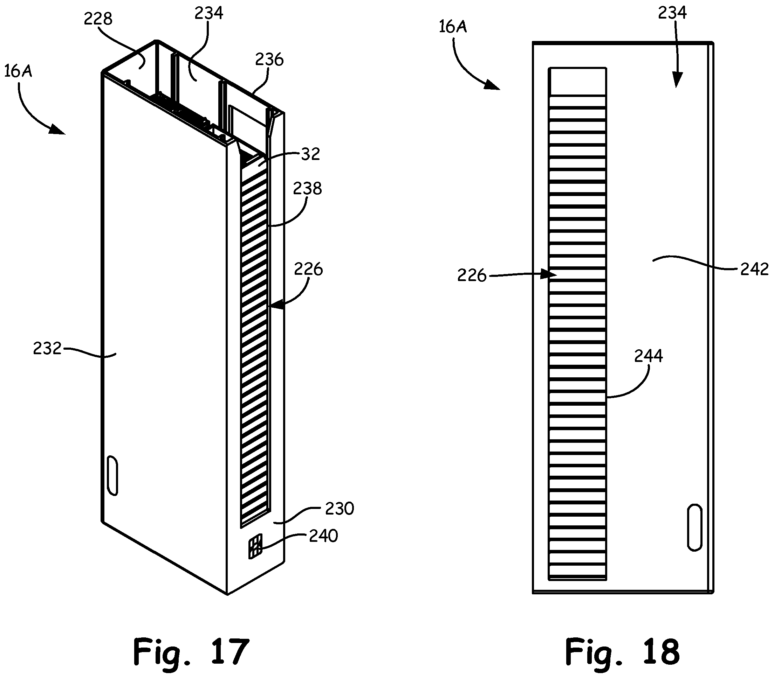

FIG. 17 is a perspective view of the supply bin 16A containing a stack 226 of the cassettes 32. In the illustrated embodiment, the supply bin 16A includes end walls 228 and 230 and side walls 232 and 234 as well as a bottom wall (not shown). The supply bin 16A defines a cavity for storing the stack 226, and has an open top 236 which is substantially rectangular and through which the stack 226 can be inserted. The side wall 232 is substantially parallel to the side wall 234. The end wall 228 extends from the side wall 232 to the side wall 234. The end wall 230 is positioned opposite the end wall 228. The end wall 230 has a vertical slot 238 sized for allowing an arm, such as the actuator support 31B, to extend into and move vertically within the supply bin 16A.

An integrated circuit chip 240 is positioned on the end wall 230 and can contain information about the supply bin 16A and/or the stack 226. For example, in one embodiment the integrated circuit chip 240 can include information regarding the color of the cassettes 32 in the supply bin 16A. In another embodiment, the integrated circuit chip 240 can include information regarding the type (lidless, open lid, or closed lid) of the cassettes 32 in the supply bin 16A. In yet another embodiment, the integrated circuit chip 240 can include information regarding the angle of the front panel 180 of the cassettes 32 in the supply bin 16A. In other embodiments, the integrated circuit chip 240 can include some combination of the information regarding color, type, angle of the front panel, and/or other information regarding of the cassettes 32 in the supply bin 16A. The integrated circuit chip 240 can interface with the cassette supply assembly 14 to allow the cassette supply assembly 14 to determine what cassettes 32 are contained in the supply bin 16A.

FIG. 18 is a side view of the supply bin 16A. In the illustrated embodiment, the side wall 234 of the supply bin 16A includes a solid portion 242 and an aperture 244. The aperture 244 extends most of, but not the entire length of the side wall 234. The aperture 244 is a tape removal opening sized and shaped to allow tape removal from the stack 226 of the cassettes 32 after the stack 226 has been inserted in the supply bin 16A. Thus, the aperture 244 can allow the cassettes 32 to be loaded more efficiently by allowing the tape to remain on the stack 226 during the loading into the supply bin 16A.

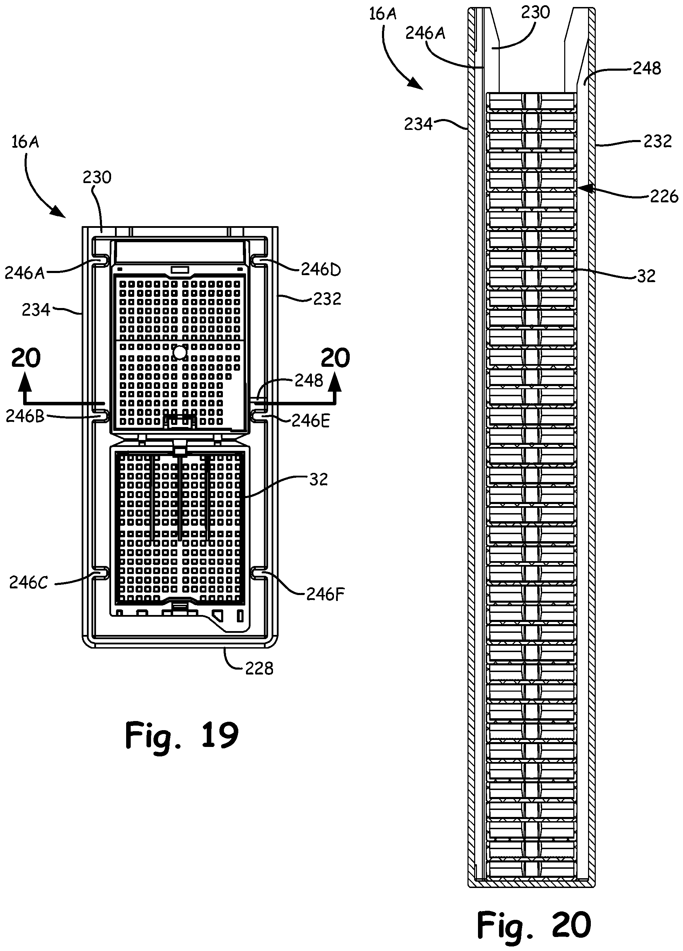

FIG. 19 is a top view of the supply bin 16A. In the illustrated embodiment, a series of positioning rails 246A-246C extend inward from the side wall 234 and a series of positioning rails 246D-246F extend inward from the side wall 232. The positioning rails 246A-246F support the cassettes 32 and can hold the cassettes 32 away from the side walls 232 and 234 so that the picker head 28 can extend into the supply bin 16A to pick the cassettes 32.

The supply bin 16A can include a biasing member 248 for biasing the cassettes 32 in a direction to align the cassettes 32 within the supply bin 16A. The biasing member 248 can be soft enough to be pushed out of the way by the picker head 28 and can be resilient enough to return to position after the picker head 28 passes by. In the illustrated embodiment, the biasing member 248 is a thin soft piece of rubber attached to the side wall 232 and extending toward the side wall 234. In alternative embodiments, the biasing member 248 can be a thin piece of soft foam, a piece of flexible plastic or spring steel, a series of spring loaded plates, or another structure suitable for the application.

FIG. 20 is a sectional view of the supply bin 16A taken along line 20-20 of FIG. 19. In the illustrated embodiment, the positioning rail 246A extends substantially the entire height of the supply bin 16A. The biasing member 248 extends substantially the entire height of the stack 226 of the cassettes 32, but less than the entire height of the supply bin 16A. In alternative embodiments, the size, shape, and orientation of the positioning rail 246A and/or the biasing member 248 can be changes as suitable for the application.

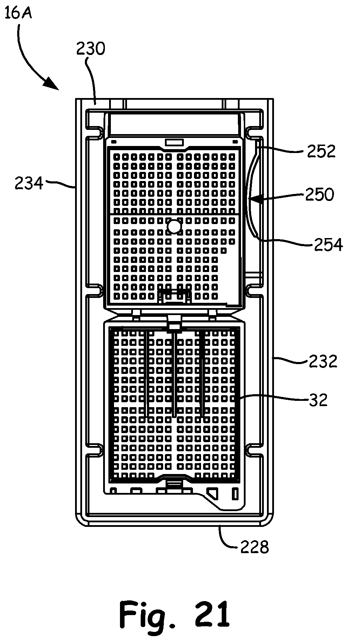

FIG. 21 is a top view of the supply bin 16A having a biasing member 250 which is an alternative embodiment of the biasing member 248 (shown in FIGS. 19 and 20). The biasing member 250 is flexible cantilevered spring attached to the side wall 232 at a first end 252 and free at a second end 254. The biasing member 250 can be soft enough to be pushed out of the way by the picker head 28 and can be resilient enough to return to position after the picker head 28 passes by. The biasing member 250 can be made of plastic, steel, or another resilient material suitable for the application.

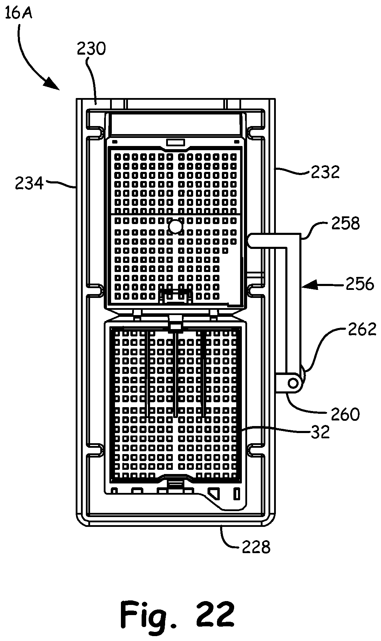

FIG. 22 is a top view of the supply bin 16A having a biasing member 256 which is another alternative embodiment of the biasing member 248 (shown in FIGS. 19 and 20). The biasing member 256 includes a plate 258 pivotably attached to the side wall 232 at a bracket 260, and can include a torsion spring 262 for biasing the plate 258 toward the cassettes 32. The biasing member 256 can be soft enough to be pushed out of the way by the picker head 28 and can be resilient enough to return to position after the picker head 28 passes by.

The supply bin 16A is illustrated as being sized for the cassettes 32 being an open lid type cassette, such as the open lid type biopsy cassette 202 (shown in FIG. 15B). However, in other embodiments the supply bin 16A can be sized to be smaller for the lidless type embedding cassette 200 (shown in FIG. 15A) and/or the closed lid type tissue cassette 204 (shown in FIG. 15C). For example, a spacer insert (not shown) could be added to the supply bin 16A to take up space near the end wall 228 so as to reduce the effective size of the supply bin 16A to fit the lidless type embedding cassette 200 and/or the closed lid type tissue cassette 204. Alternatively, the side walls 232 and 234 can be shorted to reduce the size of the supply bin 16A so as to fit the lidless type embedding cassette 200 and/or the closed lid type tissue cassette 204.

Although FIGS. 18-22 are illustrated with respect to supply bin 16A, supply bins 16B-16H (shown in FIGS. 1, 2, 4, and 5) can have some or all of the same or similar features. Thus, in some embodiments the cassette supply assembly 14 (shown in FIGS. 1, 2, and 4-6) can house multiple stacks (up to 8 stacks in the illustrated embodiment) of the same type of cassette or can house multiple stacks of different types of cassettes. For example, in one embodiment, the supply bin 16A can contain the lidless type cassettes 200, the supply bin 16B can contain the open lid type biopsy cassette 202, and the supply bin 16C can contain the closed lid type cassette 202. In another embodiment, the supply bin 16A can contain the cassettes 32 having the front panels 180 angled at about 35 degrees and the supply bin 16B can contain the cassettes 32 having the front panels 180 angled at about 45 degrees. In another embodiment, the supply bin 16A can contain the cassettes 32 having a first color, the supply bin 16B can contain the cassettes 32 having a second color, and the supply bin 16C can contain the cassettes 32 having a third color. In still other embodiments, the supply bins 16A-16H can contain cassettes having various permutations of color, angle of front panel, and/or cassette type (shape).

This can allow a user operating the cassette printer 10 to be able to select a specific type of cassette desired for a particular application. The user can enter a command (via the computer interface 35B and/or the user interface controller 25) of a desired cassette, and the cassette printer 10 can respond by selecting the appropriate cassette from an appropriate one of the supply bins 16A-16H, delivering that cassette from the cassette supply assembly 14 to the printing assembly 12, printing relevant data on the front panel 180, and then ejecting the cassette via the ejection assembly 18. In embodiments where the cassette supply assembly 14, the printing assembly 12, and the ejection assembly 18 are all configured to function with each of the above described types of cassettes and front panel angles, a variety of cassettes can all be printed with the same cassette printer 10.

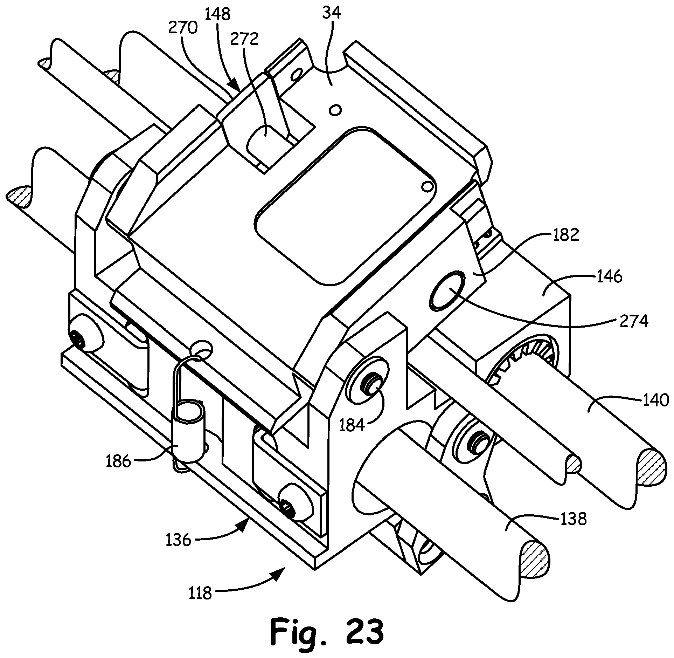

FIG. 23 is an enlarged perspective view of the carriage 136 of the carriage assembly 118 without a cassette in the cassette holder 34. In the illustrated embodiment, the spring loaded clamp 148 is illustrated with a plate 270 attached to a slide pin 272. The slide pin 272 is slidably connected to and extending through the springboard 182. The spring loaded clamp 148 is illustrated in an open position, with the plate 270 and the slide pin 272 slid laterally to the left (as shown in FIG. 23). When the carriage 136 is in a loading position, an end 274 of the slide pin 272 can abut a structural component (not shown in FIG. 23) which forces the pin laterally to the left and thus opens the spring loaded clamp. A cassette can then be placed in the cassette holder 34 for printing, and the carriage 136 can slid to a printing position.

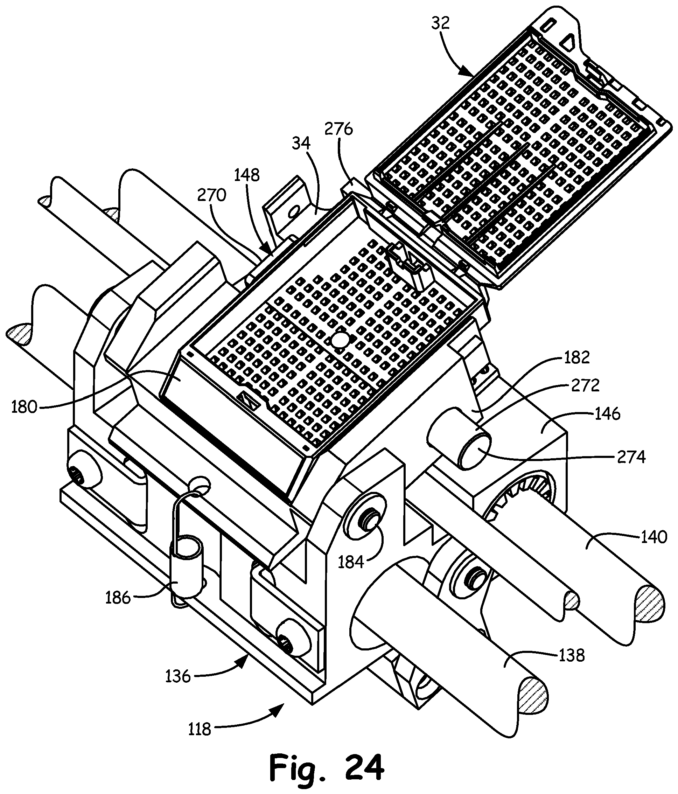

FIG. 24 is an enlarged perspective view of the carriage 136 of the carriage assembly 118 with the cassette 32 in the cassette holder 34. The cassette 32 is seated in the cassette holder 34, abutting a backstop 276 of the cassette holder 34 and clamped by the spring loaded claim 148. The spring loaded clamp 148 is illustrated in a closed position, with the plate 270 and the slide pin 272 slid laterally to the right (as shown in FIG. 24). In the closed position, the plate 270 abuts and clamps on a side of the cassette 32, and the end 274 of the slide pin 272 extends out of the springboard 182.

After data is printed on the front panel 180 of the cassette 32, the cassette 32 can be ejected as described above and reloaded with a new cassette. When the carriage 136 returns to the loading position, the end 274 of the slide pin 272 is depressed and the plate 270 is slid open to allow the new cassette to be inserted in the cassette holder 34.

## Claims

1. A histological specimen cassette printer (10) comprising:
a printing section comprising a printhead (37) and a cassette holder (34);
a cassette supply assembly (14) having a supply top and a supply bottom, wherein the cassette supply assembly (14) is positioned proximate the printing section; and
a cassette picker assembly (26) comprising:
a picker head (28) comprising a cassette grasping mechanism at a bottom (84) of the picker head (28); and
a picker actuator (30) operably connected to the picker head (28) to move the picker head (28) from the supply top of the cassette supply assembly (14) to a position proximate the cassette holder and back to the supply top of the cassette supply assembly (14),
**characterised in that** the cassette grasping mechanism comprises:
a first finger (86); and
a second finger (88) positioned opposite the first finger, wherein the first and second fingers are actuable such that lower ends of the first and second fingers (86, 88) move inward to grasp opposite sides of a histological specimen cassette (32).

2. The histological specimen cassette printer (10) of claim 1, wherein the picker actuator (30) comprises:
a vertical support (31A) rotatable about a vertical axis; and
an arm (31B) extending substantially horizontally from the vertical support (31A) to the picker head (28).

3. The histological specimen cassette printer (10) of claim 2, wherein the arm (31B) is slidably connected to the vertical support (31A) such that the picker actuator (30) can raise and lower the picker head (28) for picking a histological specimen cassette (32) from the supply top and placing the histological specimen cassette (32) down on the cassette holder (34).

4. The histological specimen cassette printer (10) of claim 3, wherein the cassette supply assembly (14) comprises a plurality of supply bins (16A-H) arranged in an arc about a vertical axis of rotation of the picker actuator (30) such that each of the plurality of supply bins (16A-H) are each positioned substantially the same distance from the vertical axis of rotation.

5. The histological specimen cassette printer (10) of claim 1, wherein the picker head (28) further comprises:
a picker frame (72), wherein the first and second fingers (86, 88) are pivotably mounted to the picker frame (27);
a spring (98) biasing the first and second fingers (86, 88) inward in a closed position; and
a solenoid (96) connected to the first and second fingers (86, 88) and actuable to pivot the first and second fingers (86, 88) apart in an open position.

6. The histological specimen cassette printer (10) of claim 5, and further comprising:
a third finger spaced from the first and second fingers, wherein the third finger is actuable such that a lower end of the third finger moves to grasp the histological specimen cassette (32) along with the first and second fingers (86, 88).

7. The histological specimen cassette printer (10) of claim 6, wherein the third finger is positioned opposite of the first finger (86) and moves in unison with the second finger (88).

8. The histological specimen cassette printer (10) of any of claims 1 to 7, wherein the picker head further comprises:
a cassette sensor (80) having a sensor flag positioned at the bottom (84) of the picker head (28) for sensing when a histological specimen cassette (32) is adjacent the bottom (84) of the picker head (28); and
a controller programmed to actuate the cassette grasping mechanism to grasp the histological specimen cassette (32) in response to receiving a signal from the cassette sensor (80).

## Patentansprüche

1. Drucker (10) zum Bedrucken von Kassetten für histologische Proben, aufweisend:
einen Druckabschnitt, der einen Druckkopf (37) und einen Kassettenhalter (34) aufweist;
eine Kassettenvorratsanordnung (14) mit einer Vorratsoberseite und einer Vorratsunterseite, wobei die Kassettenvorratsanordnung (14) nahe an dem Druckabschnitt angeordnet ist; und
eine Kassettengreiferanordnung (26) aufweisend:
einen Greiferkopf (28), der einen Kassettengreifmechanismus an einer Unterseite (84) des Greiferkopfs (28) aufweist; und
einen Greiferaktuator (30), der mit dem Greiferkopf (28) operativ verbunden ist, um den Greiferkopf (28) von der Vorratsoberseite der Kassettenvorratsanordnung (14) zu einer Position nahe an dem Kassettenhalter und zurück zu der Vorratsoberseite der Kassettenvorratsanordnung (14) zu bewegen,
**dadurch gekennzeichnet, dass** der Kassettengreifmechanismus aufweist:
einen ersten Finger (86); und
einen zweiten Finger (88), der gegenüber dem ersten Finger angeordnet ist, wobei die ersten und zweiten Finger derart betätigbar sind, dass untere Enden der ersten und zweiten Finger (86, 88) sich einwärts bewegen, um gegenüberliegende Seiten einer Gewebeprobekassette (32) zu greifen.

2. Drucker (10) nach Anspruch 1, wobei der Greiferaktuator (30) aufweist:
einen vertikalen Träger (31A), der um eine vertikale Achse rotierbar ist; und
einen Arm (31B), der sich im Wesentlichen horizontal von dem vertikalen Träger (31A) zu dem Greiferkopf (28) erstreckt.

3. Drucker (10) nach Anspruch 2, wobei der Arm (31B) gleitbar mit dem vertikalen Träger (31A) verbunden ist, so dass der Greiferaktuator (30) den Greiferkopf (28) heben und senken kann, um eine Gewebeprobekassette (32) von der Vorratsoberseite zu greifen und die Gewebeprobekassette (32) nach unten auf den Kassettenhalter (34) zu legen.

4. Drucker (10) nach Anspruch 3, wobei die Kassettenvorratsanordnung (14) mehrere Vorratsbehälter (16A-H) aufweist, die bogenförmig um eine vertikale Rotationsachse des Greiferaktuators (30) angeordnet sind, so dass jeder der mehreren Vorratsbehälter (16A-H) im Wesentlichen im gleichen Abstand von der vertikalen Rotationsachse angeordnet ist.

5. Drucker (10) nach Anspruch 1, wobei der Greiferkopf (28) ferner aufweist:
einen Greiferrahmen (72), wobei der erste und der zweite Finger (86, 88) schwenkbar an dem Greiferrahmen (27) angebracht sind;
eine Feder (98), die den ersten und zweiten Finger (86, 88) einwärts in eine geschlossene Position vorspannt; und
ein Solenoid (96), das mit dem ersten und zweiten Finger (86, 88) verbunden ist und betätigbar ist, um den ersten und zweiten Finger (86, 88) voneinander weg in eine offene Position zu schwenken.

6. Drucker (10) nach Anspruch 5 und ferner aufweisend:
einen dritten Finger, der von dem ersten und zweiten Finger beabstandet ist, wobei der dritte Finger derart betätigbar ist, dass ein unteres Ende des dritten Fingers sich bewegt, um zusammen mit dem ersten und zweiten Finger (86, 88) die Gewebeprobekassette (32) zu greifen.

7. Drucker (10) nach Anspruch 6, wobei der dritte Finger gegenüber dem ersten Finger (86) angeordnet ist und sich in Abstimmung mit dem zweiten Finger (88) bewegt.

8. Drucker (10) nach einem der Ansprüche 1 bis 7, wobei der Greiferkopf ferner aufweist:
einen Kassettensensor (80) mit einer Sensorfahne, die an der Unterseite (84) des Greiferkopfs (28) angeordnet ist, um zu detektieren, wenn eine Gewebeprobekassette (32) neben der Unterseite (84) des Greiferkopfs (28) ist; und
eine Steuerungseinrichtung, die programmiert ist, als Antwort auf einen Empfang eines Signals aus dem Kassettensensor (80) den Kassettengreifmechanismus zu betätigen, um die Gewebeprobekassette (32) zu greifen.

## Revendications

1. Imprimante de cassette d'échantillon histologique (10) comprenant :
une section d'impression comprenant une tête d'impression (37) et un support de cassette (34) ;
un ensemble d'alimentation de cassette (14) ayant une partie supérieure d'alimentation et une partie inférieure d'alimentation, dans laquelle l'ensemble d'alimentation de cassette (14) est positionné à proximité de la section d'impression ; et
un ensemble de bras de cassette (26) comprenant :
une tête de bras (28) comprenant un mécanisme de préhension de cassette au niveau d'un fond (84) de la tête de bras (28) ; et
un actionneur de bras (30) raccordé, de manière opérationnelle, à la tête de bras (28) pour déplacer la tête de bras (28) de la partie supérieure d'alimentation de l'ensemble d'alimentation de cassette (14) à une position à proximité du support de cassette et revenir vers la partie supérieure d'alimentation de l'ensemble d'alimentation de cassette (14),
**caractérisée en ce que** :
le mécanisme de préhension de cassette comprend :
un premier doigt (86) ; et
un deuxième doigt (88) positionné à l'opposé du premier doigt, dans laquelle les premier et deuxième doigts peuvent être activés de sorte que les extrémités inférieures des premier et deuxième doigts (86, 88) se déplacent vers l'intérieur afin de saisir les côtés opposés d'une cassette d'échantillon histologique (32).

2. Imprimante de cassette d'échantillon histologique (10) selon la revendication 1, dans laquelle l'actionneur de bras (30) comprend :
un support vertical (31A) pouvant tourner autour d'un axe vertical ; et
un bras (31B) s'étendant de manière sensiblement horizontale du support vertical (31A) à la tête de bras (28).

3. Imprimante de cassette d'échantillon histologique (10) selon la revendication 2, dans laquelle le bras (31B) est raccordé de manière coulissante au support vertical (31A) de sorte que l'actionneur de bras (30) peut lever et abaisser la tête de bras (28) pour saisir une cassette d'échantillon histologique (32) à partir de la partie supérieure d'alimentation et abaisser la cassette d'échantillon histologique (32) sur le support de cassette (34).

4. Imprimante de cassette d'échantillon histologique (10) selon la revendication 3, dans laquelle l'ensemble d'alimentation de cassette (14) comprend une pluralité de bacs d'alimentation (16A-H) agencés sur un arc autour d'un axe de rotation vertical de l'actionneur de bras (30) de sorte que chacun de la pluralité de bacs d'alimentation (16A-H) est positionné sensiblement à la même distance de l'axe de rotation vertical.

5. Imprimante de cassette d'échantillon histologique (10) selon la revendication 1, dans laquelle la tête de bras (28) comprend en outre :
un bâti de bras (72), dans lequel les premier et deuxième doigts (86, 88) sont montés de manière pivotante sur le bâti de bras (27) ;
un ressort (98) sollicitant les premier et deuxième doigts (86, 88) vers l'intérieur dans une position fermée ; et
un solénoïde (96) raccordé aux premier et deuxième doigts (86, 88) et pouvant être actionné pour faire pivoter les premier et deuxième doigts (86, 88) dans une position ouverte.

6. Imprimante de cassette d'échantillon histologique (10) selon la revendication 5, et comprenant en outre :
un troisième doigt espacé des premier et deuxième doigts, dans laquelle le troisième doigt peut être actionné de sorte qu'une extrémité inférieure du troisième doigt se déplace afin de saisir la cassette d'échantillon histologique (32) conjointement avec les premier et deuxième doigts (86, 88).

7. Imprimante de cassette d'échantillon histologique (10) selon la revendication 6, dans laquelle le troisième doigt est positionné à l'opposé du premier doigt (86) et se déplace à l'unisson avec le deuxième doigt (88).

8. Imprimante de cassette d'échantillon histologique (10) selon l'une quelconque des revendications 1 à 7, dans laquelle la tête de bras comprend en outre :
un capteur de cassette (80) ayant un drapeau de capteur positionné au fond (84) de la tête de bras (28) pour détecter le moment où la cassette d'échantillon histologique (32) est adjacente au fond (84) de la tête de bras (28) ; et
un organe de commande programmé pour actionner le mécanisme de préhension de cassette afin de saisir la cassette d'échantillon histologique (32) en réponse à la réception d'un signal provenant du capteur de cassette (80).
